# EUROPÄISCHE PATENTSCHRIFT

(11) **EP 1 693 791 B1**
(45) Veröffentlichungstag und Bekanntmachung des Hinweises auf die Patenterteilung: **23.01.2008**
(21) Anmeldenummer: 06002024.5
(22) Anmeldetag: 01.02.2006
(51) Int. Cl.: G06K 19/077, G06K 19/04, G09F 3/04

(54) **Kunststoffträger mit Transponder**
Plastic carrier with transponder
Support en matière plastique avec transpondeur

(30) Priorität: 16.02.2005 EP 05003210
(43) Veröffentlichungstag der Anmeldung: 23.08.2006
(73) Patentinhaber: Huber, Johann, 4484 Kronstorf (AT)
(72) Erfinder: Huber, Johann, 4484 Kronstorf (AT)
(74) Vertreter: Vetter, Hans

(56) Entgegenhaltungen:
- EP-A- 0 578 281
- EP-A- 0 749 094
- EP-A- 0 772 152
- EP-A- 1 246 152
- US-A1- 2003 034 087
- US-B1- 6 239 737

## Beschreibung

Die Erfindung betrifft einen Kunststoffträger mit einem einen Datenspeicher aufweisenden Transponder zur drahtlosen Datenübertragung vom und zum plättchenartigen Kunststoffträger, der mit Befestigungsmitteln zur Befestigung an elektronisch zu kennzeichnenden Gegenständen versehen ist.

Bei einem beispielsweise aus der EP 1246152 A1 bekannten Kunststoffträger ist der Transponder fest mit dem Kunststoffträger verbunden, insbesondere in das Kunststoffmaterial eingeschweißt. Dies hat den Nachteil, dass der Transponder zusammen mit dem nur einmal verwendbaren Kunststoffträger, der fest mit dem jeweiligen zu kennzeichnenden Gegenstand verbunden werden muss, verloren geht. Bei dem als billiges Massenprodukt hergestellten Kunststoffträger bedeutet jedoch der Transponder einen nicht unerheblichen Kostenfaktor, sodass die Gesamtkosten eines solchen mit einem Transponder versehenen Kunststoffträgers für die vorgesehene Anwendung unakzeptabel hoch sind.

Aus der EP-A-0 772 152 oder der US-B1-6 239 737 sind auch Kunststoffträger bekannt, an denen jeweils ein getrennter, mit einem Transponder versehener Transponderträger verrastbar oder verklemmbar ist. Ein Problem bei solchen Kunststoffträgern besteht darin, den relativ teuren Transponder möglichst mehrfach verwenden zu können.

Eine Aufgabe der vorliegenden Erfindung besteht darin, einen Kunststoffträger mit Transponder zu schaffen, bei dem die Gesamtkosten deutlich reduziert werden können und bei dem der Transponder auf einfache Weise mehrfach verwendbar ist.

Diese Aufgabe wird erfindungsgemäß durch einen Kunststoffträger mit den Merkmalen des Anspruchs 1 gelöst.

Beim erfindungsgemäßen Kunststoffträger ist der Transponder in vorteilhafter Weise an oder in einem von dem Kunststoffträger getrennten Transponderträger angeordnet, der mit dem Kunststoffträger verrastbar oder verklemmbar ist. Da er somit nicht irreversibel mit dem Kunststoffträger verbunden ist, kann er beispielsweise nach einer Zerstörung des Kunststoffträgers wiederverwendet werden, das heißt, mit einem neuen Kunststoffträger verrastet werden. Dies führt zu deutlich reduzierten Kosten des Kunststoffträgers bzw. der gesamten Anordnung, die damit im Bereich herkömmlicher Kunststoffträger zur Kennzeichnung von Gegenständen ohne Transponder liegen, wie sie beispielsweise in der GB 2075464 A oder EP 248928 A1 beschrieben sind. Man erreicht dadurch die Möglichkeit einer elektronischen Kennzeichnung von Gegenständen bei Kosten, die im herkömmlichen Rahmen von Kunststoffträgern mit Strichcodierung oder optischer Codierung liegen.

In besonders vorteilhafter Weise besteht der Kunststoffträger aus einem mit den Befestigungsmitteln versehenen plättchenförmigen Trägerteil und einem plättchenförmigen Abdeckteil, die miteinander verbunden oder verbindbar sind, wobei der Transponderträger dazwischen verrastbar oder verklemmbar ist. Hierdurch lässt sich der Kunststoffträger und der Schlitz zur Aufnahme des Transponderträgers besonders einfach und kostengünstig herstellen.

Zur mehrfachen Wiederverwendung des Transponders ist das Abdeckteil mit einem Vorsprung zum Abschlagen des Abdeckteils vom Trägerteil versehen. Dieser Vorsprung ist so dimensioniert, dass er beim Abschlagen oder Abtrennen entweder das gesamte Abdeckteil zerstört und dadurch abtrennt oder dass Befestigungszapfen brechen und dadurch das Abdeckteil vom Trägerteil abgelöst wird.

Durch die in den Unteransprüchen aufgeführten Maßnahmen sind vorteilhafte Weiterbildungen und Verbesserungen des im Anspruch 1 angegebenen Kunststoffträgers möglich.

In einer bevorzugten Ausführung ist der Vorsprung zum Abschlagen des Abdeckteils vom Trägerteil, also zur Freisetzung des Transponders, topfartig oder leistenförmig ausgebildet. Dabei hat sich eine Gestaltung des Vorsprungs als besonders vorteilhaft erwiesen, die zur verschiebbaren Aufnahme in einer durchgehenden Linearnut in der Schlagfläche des Hammerkopfes eines Einschlaghammers ausgebildet ist. Besonders eignet sich dafür die leistenförmige Ausbildung. Hierdurch wird verhindert, dass der Kunststoffträger oder Bereiche desselben beim Einschlagen beispielsweise in Holz zerstört oder beschädigt werden.

In einer bevorzugten Ausführungsform besitzt der Kunststoffträger einen Schlitz zur Aufnahme des plättchenförmigen Transponderträgers, der dadurch besonders gut und sicher gehalten wird, wobei gleichzeitig der Transponder geschützt im Kunststoffträger angeordnet ist.

Der Kunststoffträger besitzt zweckmäßigerweise wenigstens eine flexible Rastzunge zum Einrasten in entsprechende Rastausnehmungen des Transponderträgers, wobei die wenigstens eine Rastzunge vorzugsweise einstückig angeformt oder durch U-förmige Schlitze gebildet ist. Diese Rastzunge ist zweckmäßigerweise mit einem Rastvorsprung versehen, der zum Eingriff in die als Durchgangsloch oder Vertiefung im Transponderträger ausgebildete Rastausnehmung vorgesehen ist.

In einer weiteren bevorzugten Ausführung ist das Trägerteil oder das Abdeckteil mit Befestigungszapfen versehen ist, die zur Befestigung der beiden Teile aneinander zum Eingriff in entsprechende Zapfenaufnahmen des jeweils anderen Teils ausgebildet sind. Diese Zapfen können dabei in vorteilhafter Weise gleichzeitig als Führungen beim Einstecken des Transponderträgers dienen.

Die Befestigungsmittel sind in an sich bekannter Weise als einstückig angeformte Einschlagvorsprünge zum Einschlagen in den zu kennzeichnenden Gegenstand ausgebildet, insbesondere in einen hölzernen Gegenstand.

Zur Erleichterung des Einschlagens des Kunststoffträgers in den zu kennzeichnenden Gegenstand besitzt er zweckmäßigerweise an seinen vier Ecken in ebenfalls an sich bekannter Weise vier hakenartige Haltevorsprünge, die sich bezüglich der Einschlagvorsprünge in die entgegengesetzte Richtung erstrecken und die zum Anstecken an den Hammerkopf eines Einschlaghammers ausgebildet sind.

Der Transponderträger ist bevorzugt als langgestrecktes Plättchen ausgebildet und trägt neben dem Transponder eine Sende- und/oder Empfangsantenne, die ebenfalls im Plättchenkörper integriert ist.

Als Transponder eignet sich bevorzugt ein RFID-Transponder (Radio Frequency Identification).

Ein Ausführungsbeispiel der Erfindung ist in der Zeichnung dargestellt und in der nachfolgenden Beschreibung näher erläutert. Es zeigen:
- Figur 1: eine perspektivische Ansicht des gesamten Kunststoffträgers mit eingestecktem und eingerastetem Transponderträger als erstes Ausführungsbeispiel der Erfindung,
- Figur 2: eine perspektivische Rückansicht des Abdeckteils des Kunststoffträgers,
- Figur 3: eine perspektivische Rückansicht des Trägerteils des Kunststoffträgers,
- Figur 4: eine perspektivische Schrägansicht dieses Trägerteils,
- Figur 5: ein gegenüber dem ersten Ausführungsbeispiel abgewandeltes Ausführungsbeispiel in einer Ansicht gemäß Figur 1, wobei der topfartige Vorsprung durch einen leistenförmigen Vorsprung ersetzt ist, und
- Figur 6: einen Einschlaghammer zum Einschlagen des Kunststoffträgers beispielsweise in Holz, dessen Hammerfläche einen Schlitz zur verschiebbaren Aufnahme des leistenförmigen Vorsprungs besitzt.

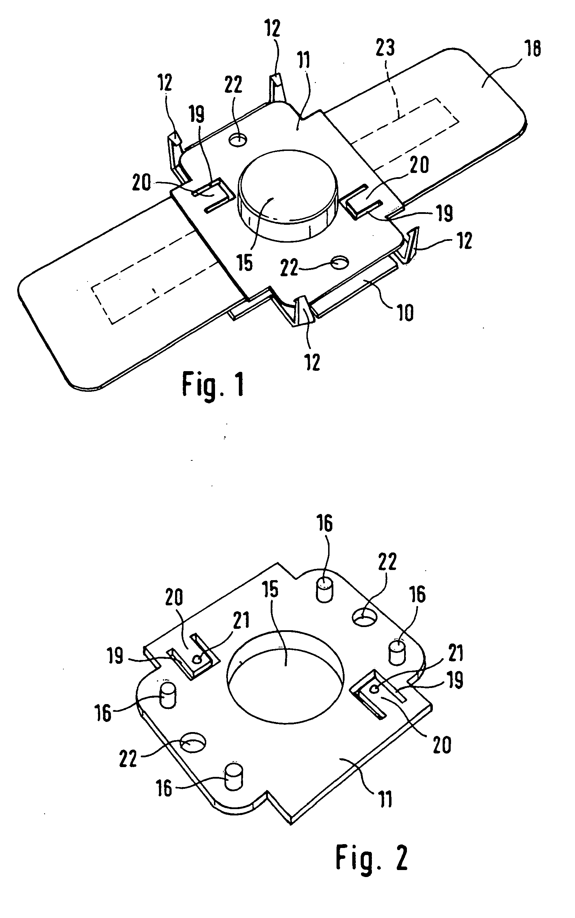

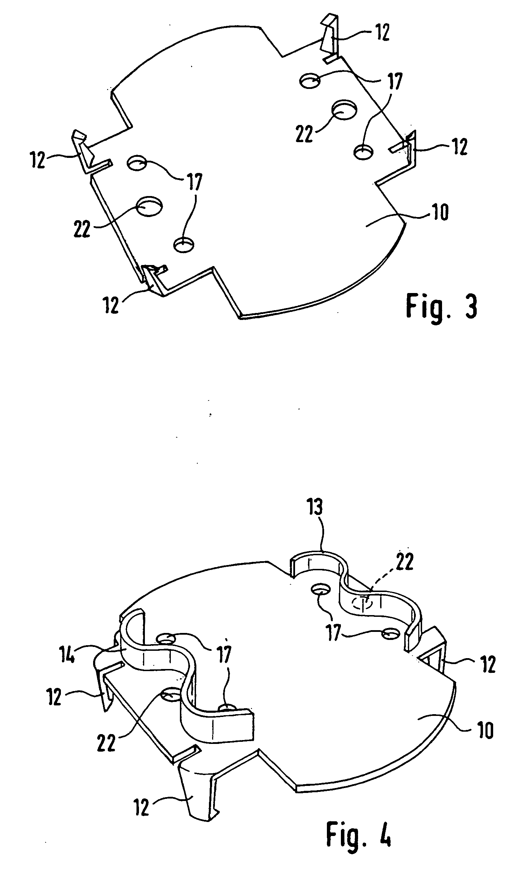

Der in den Figuren 1 bis 4 als erstes Ausführungsbeispiel dargestellte Kunststoffträger ist zweiteilig aufgebaut und besteht aus einem plättchenförmigen Trägerteil 10 und einem plättchenförmigen Abdeckteil 11. Das in den Figuren 3 und 4 in zwei Ansichten dargestellte Trägerteil besitzt an den vier Ecken vier hakenartige, einstückig angeformte Haltevorsprünge 12. Diese dienen zum Anstecken des gesamten Kunststoffträgers an einen nicht dargestellten Einschlaghammer, mit dessen Hilfe der Kunststoffträger beispielsweise gegen die Stirnseite eines Rundholzes geschlagen wird. Dabei dringen die aus Figur 4 erkennbaren wellenbandartigen Einschlagvorsprünge 13, 14 in diese Stirnseite ein und fixieren dadurch den Kunststoffträger am Rundholz. Die vier hakenartigen Haltevorsprünge 12 greifen dabei in eine Ringnut des Hammerkopfes des Einschlaghammers ein. Dies ist im eingangs angegebenen Stand der Technik oder in der DE 3837175 näher beschrieben.

Das Abdeckteil 11 besitzt mittig einen topfartigen Vorsprung 15 und weist an den vier Eckbereichen vier gegenüber dem topfartigen Vorsprung 15 in die entgegengesetzte Richtung weisende Befestigungszapfen auf, die zum Eingriff in vier entsprechende Befestigungsaufnahmen 17 des Trägerteils 10 ausgebildet sind. Die Zahl der Befestigungszapfen und Befestigungsaufnahmen kann auch geringer sein, z.B. 2 oder 3, oder größer sein. Das Abdeckteil 11 wird zur Montage so mit dem Trägerteil 10 zusammengesteckt, dass die Befestigungszapfen 16 in die Befestigungsaufnahmen 17 eingreifen. Dort werden sie durch Verklemmen, Verrasten, Verkleben und/oder Verschweißen fixiert, sodass der in Figur 1 dargestellte Kunststoffträger gebildet wird.

Beim Fixieren des Abdeckteils 11 am Trägerteil 10 wird ein spaltartiger Zwischenraum zwischen Abdeckteil 11 und Trägerteil 10 freigelassen, sodass ein plättchenförmiger Transponderträger 18 dazwischen eingeschoben werden kann. Die Befestigungszapfen 16 dienen dabei zur Führung.

Durch Einformen von zwei U-förmigen Schlitzen 19 werden im Abdeckteil 11 zwei elastische, federnde Zungen 20 gebildet, die jeweils an der im montierten Zustand zum Trägerteil 10 hinweisenden Seite einen Rastvorsprung 21 besitzen. Dieser Rastvorsprung greift beim Einschieben des Transponderträgers 18 in zwei entsprechende Durchgangslöcher dieses Transponderträgers 18 ein und verrastet dabei den Transponderträger 18 im Kunststoffträger. Die Durchgangslöcher im Transponderträger 18 sind in der Darstellung nicht erkennbar.

Anstelle von zwei elastischen Zungen 20 kann diese Zahl selbstverständlich auch variieren. Im einfachsten Falle kann nur eine einzige Federzunge vorgesehen sein, wobei vier Federzungen sich als günstig erwiesen haben, um den Transponderträger 18 fest im Kunststoffträger zu verrasten. Weiterhin können in alternativen Ausführungen auch andere bekannte Verrastungsmittel vorgesehen sein, beispielsweise Rastmittel, die in randseitigen, kerbenartigen Ausnehmungen des Transponderträgers 18 einrasten.

Das Trägerteil 10 und das Abdeckteil 11 weisen jeweils noch zwei im montierten Zustand miteinander fluchtende Durchgangsbohrungen 22 an entgegengesetzten Seitenbereichen auf, die zum Auffädeln des Kunststoffträgers auf einen U-förmigen Aufnehmer aus Metall oder Kunststoffmaterial eines nicht dargestellten Trägermagazins dienen.

Das Abdeckteil 11 und das Trägerteil 10 bestehen jeweils aus einem Kunststoffmaterial, wobei es sich auch um ein Kunststoffmaterial handeln kann, das sich bei der Papierherstellung in den dabei verwendeten Prozessen auflöst.

Anstelle der beschriebenen zweiteiligen Ausführung des Kunststoffträgers kann dieser prinzipiell auch einstückig aus Kunststoff gespritzt werden, wobei Verrastungsmöglichkeiten zur Verrastung des Transponderträgers vorgesehen sein müssen.

Der Transponderträger 18 ist als langgestrecktes Kunststoffplättchen ausgebildet und enthält integral einen Transponder, beispielsweise einen RFID-Transponder (Radio Frequency Identification), sowie eine damit verbundene Antenne 23, um die Reichweite zu vergrößern, wenn der einen Speicherchip enthaltende Transponder drahtlos mit Kennzeichnungsdaten versehen wird oder wenn solche Kennzeichnungsdaten drahtlos mittels eines entsprechenden Lesegeräts (zum Beispiel RFID-Lesegerät) ausgelesen werden.

In praktischen Anwendungen wird entweder der mit dem Transponderträger versehene Kunststoffträger vormontiert geliefert (mit oder ohne gespeicherte Daten) und so in einen Holzstamm eingeschlagen oder in einen zuvor an einem Holzstamm fixierten Kunststoffträger wird nachträglich ein Transponderträger eingeschoben und eingerastet. Mittels einer tragbaren Sende- und Empfangseinrichtung können dann die erforderlichen oder gewünschten Daten dieses Holzstammes oder Rundholzes eingegeben oder ergänzt werden, soweit sie noch nicht gespeichert waren. Dabei handelt es sich beispielsweise um die Stamm-Seriennummer, eine Stamm-Subnummer, die Holzart, die Länge, den Durchmesser, die Güteklasse und dergleichen. Weiterhin können noch der Name des Forstbetriebs, der Name des Schlägerers und der Name des Rückers eingegeben werden, später noch der Name des Transportbetriebs oder dergleichen. Der Stamm kann dadurch jederzeit später drahtlos identifiziert werden, sei es bei der Lagerhaltung, der Inventur, der Kennzeichnung von Schnittholzpaketen, der Beladung und Entladung vom Lkw (Ladeliste) und dergleichen. Eine solche Ladeliste entsteht dann beispielsweise automatisch durch das Lesen der Transponder bei der Beladung eines Lkw oder dergleichen, sodass beispielsweise auch bei der Einfahrt des Lkw in den Bereich eines Weiterverarbeitungsbetriebs sofort die Ladeliste drahtlos übermittelt wird. Elektronisch kann dann die angekündigte Liste mit der aktuellen Liste verglichen werden. Bei der Lagerhaltung können auf einfache Weise zugeführte und weggenommene Stämme automatisch erfasst werden. Beim Einschnitt in einem Sägewerk können eine automatische Einschnittverbuchung, eine Ausbeuterechnung (auch stammweise) und eine automatische Lagerabbuchung erfolgen. Im Wald selbst kann eine Bestandsaufnahme für den Revierförster oder eine Rundholzübernahme durch einen Käufer auf einfache Weise erfolgen.

Das Ablösen des Transponderträgers zur Wiederverwendung vor der Holzverarbeitung kann ebenfalls automatisch erfolgen. Durch ein Abschlagmesser kann jeweils der topfartige Vorsprung 15 des Abdeckteils 11 abgeschlagen werden, sodass entweder das Abdeckteil 11 zerbricht oder die Befestigungszapfen 16 brechen. Das Abdeckteil 11 fällt dann ganz oder in Stücken in einen Auffangbehälter zusammen mit dem dann losen Transponderträger 18. Die Transponderträger können dann eingesammelt und die Daten gelöscht werden. Dann können die Transponderträger 18 wieder neu verwendet und in einen neuen Kunststoffträger eingesetzt werden.

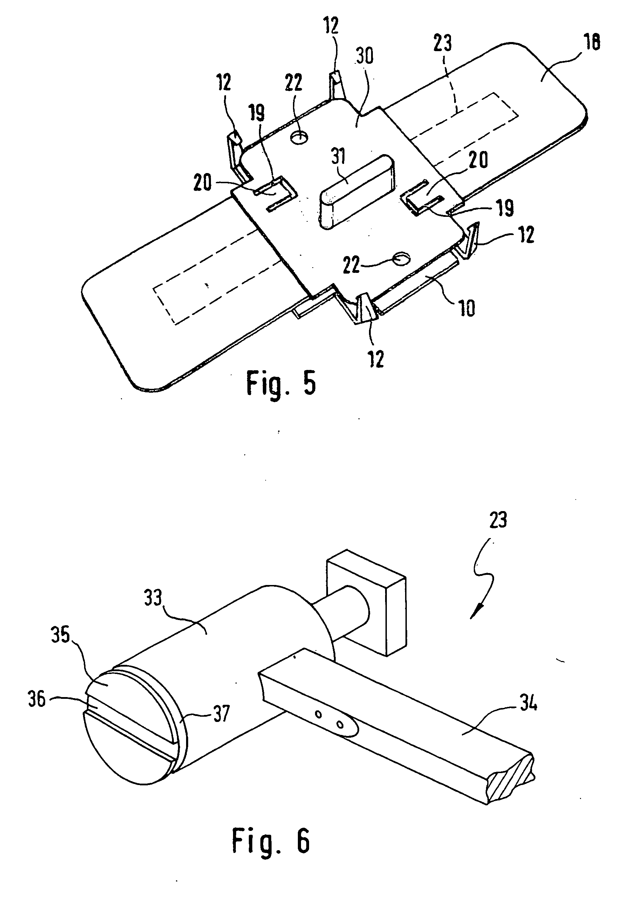

Das in Figur 5 dargestellte zweite Ausführungsbeispiel entspricht weitgehend dem ersten Ausführungsbeispiel, wobei gleiche oder gleichwirkende Teile oder Bereiche mit denselben Bezugszeichen versehen und nicht nochmals beschrieben sind. Anstelle des Abdeckteils 11 mit einem topfartigen Vorsprung 15 tritt beim zweiten Ausführungsbeispiel das Abdeckteil 30 mit einem leistenförmigen Vorsprung 31.

In Figur 6 ist ein Einschlaghammer 32 zum Einschlagen des Kunststoffträgers beispielsweise in Holz bzw. Stammholz dargestellt. Er besitzt einen Hammerkopf 33 und einen Hammerstiel 34. Die als Schlagfläche 35 ausgebildete Stirnseite des Hammerkopfes 33 besitzt eine Kreisflächenform, in der eine durchgehende Linearnut 36 eingelassen bzw. eingeformt ist, die die Schlagfläche 35 in zwei gleiche Teile teilt. Die Linearnut 36 verläuft parallel zum Hammerstiel 34 bzw. in der durch den Hammerkopf 33 und den Hammerstiel 34 aufgespannten Ebene. Geringfügig beabstandet von der Schlagfläche 35 verläuft eine Umfangsnut 37 um den Hammerkopf 33 herum, die zur Rastaufnahme der Haltevorsprünge 12 dient, wenn der Kunststoffträger zum Zwecke des Einschlagens am Hammerkopf 33 angerastet wird. Der leistenförmige Vorsprung 31 wird dabei in der Linearnut 36 positioniert, die eine an den Vorsprung 31 angepasste Querschnittsgestalt besitzt.

Beim Einschlagen des Kunststoffträgers mittels des Einschlaghammers 32, beispielsweise in Holz erfolgt als erstes eine Berührung der Einschlagvorsprünge 13, 14 mit dem Holz, wobei diese in das Holz eindringen. Da eine Schlagbewegung nicht nur eine senkrechte Bewegungskomponente zum Holz aufweist sondern auch eine Bewegungskomponente senkrecht dazu, kann sich der leistenförmige Vorsprung 31 in der Linearnut 36 in der Richtung dieser Bewegungskomponente verschieben, so dass verhindert wird, dass beispielsweise die Einschlagvorsprünge 13, 14 oder andere Teile des Kunststoffträgers brechen. Ein eventuelles Abbrechen von Haltevorsprüngen 12 ist dabei nicht relevant.

Der leistenförmige Vorsprung 31 hat im Übrigen die gleiche Funktion wie der topfartige Vorsprung 15, d.h., auch beim Abschlagen des leistenförmigen Vorsprungs 31 wird erreicht, dass entweder das Abdeckteil 30 zerbricht oder die Befestigungszapfen 16 brechen, um den Transponderträger 18 zur Wiederverwendung zu gewinnen.

Anstelle des leistenförmigen Vorsprungs 31 können prinzipiell auch andere Gestaltungen von Vorsprüngen treten, die dazu geeignet sind, in einer Nut längsverschoben zu werden.

Für den Fall, dass der in Figur 6 dargestellte Einschlaghammer 32 zum Einschlagen von Kunststoffträgern gemäß dem ersten Ausführungsbeispiel ausgebildet sein soll, so tritt anstelle der Linearnut 36 eine topfförmige Einformung, deren Gestalt der des topfförmigen Vorsprungs 15 entspricht.

## Patentansprüche

1. Kunststoffträger mit einem plättchenförmigen Transponderträger (18) mit einem einen Datenspeicher aufweisenden Transponder zur drahtlosen Datenübertragung, wobei der Transponderträger (18) mit dem Kunststoffträger verrastbar oder verklemmbar ist, der Kunststoffträger mit Befestigungsmitteln (13, 14) zur Befestigung an elektronisch zu kennzeichnenden Gegenständen versehen ist, der Kunststoffträger aus einem mit den Befestigungsmitteln (13, 14) versehenen Trägerteil (10) und einem Abdeckteil (11; 30) besteht, die miteinander verbunden oder verbindbar sind, und wobei der Transponderträger (18) dazwischen verrastbar oder verklemmbar ist, **dadurch gekennzeichnet dass** das Abdeckteil (11; 30) plättchenförmige ausgebildet und mit einem aus seiner Ebene hervorstehenden Vorsprung (15; 31) zum Abschlagen des Abdeckteils (11; 30) vom ebenfalls plättchenförmigen Trägerteil (10) versehen ist, dass ein Schlitz zum Einschieben des plättchenförmigen Transponderträgers (18) zwischen dem Abdeckteil (11; 30) und dem Trägerteil (10) freigelassen ist, und dass die Befestigungsmittel (13, 14) als einstückig am Trägerteil (10) angeformte Einschlagvorsprünge zum Einschlagen in den aus Holz bestehenden und zu kennzeichnenden Gegenstand ausgebildet sind.

2. Kunststoffträger nach Anspruch 1, **dadurch gekennzeichnet, dass** der Vorsprung (15; 31) topfartig oder leistenförmig ausgebildet ist.

3. Kunststoffträger nach einem der vorhergehenden Ansprüche, **dadurch gekennzeichnet, dass** er wenigstens eine flexible Rastzunge (20) zum Einrasten in eine entsprechende Rastausnehmung des Transponderträgers (18) besitzt, die vorzugsweise einstückig angeformt oder durch U-förmige Schlitze (19) gebildet ist.

4. Kunststoffträger nach Anspruch 3, **dadurch gekennzeichnet, dass** die wenigstens eine Rastzunge (20) mit einem Rastvorsprung (21) versehen ist, der zum Eingriff in die als Durchgangsloch oder Vertiefung im Transponderträger (18) ausgebildete Rastausnehmung vorgesehen ist.

5. Kunststoffträger nach einem der vorhergehenden Ansprüche, **dadurch gekennzeichnet, dass** das Trägerteil (10) oder das Abdeckteil (11; 30) mit Befestigungszapfen (16) versehen ist, die zur Befestigung der beiden Teile (10, 11; 30) aneinander zum Eingriff in entsprechende Zapfenaufnahmen (17) des jeweils anderen Teils ausgebildet sind.

6. Kunststoffträger nach einem der vorhergehenden Ansprüche, **dadurch gekennzeichnet, dass** an seinen vier Ecken vier hakenartige Haltevorsprünge, (12) angeformt sind, die sich bezüglich der Einschlagvorsprünge (13, 14) in die entgegengesetzte Richtung erstrecken und die zum Anstecken an den Hammerkopf eines Einschlaghammers ausgebildet sind.

7. Kunststoffträger nach einem der vorhergehenden Ansprüche, **dadurch gekennzeichnet, dass** der Transponderträger (18) als langgestrecktes Plättchen ausgebildet ist und neben dem Transponder eine Sende- und/oder Empfangsantenne (23) trägt.

8. Kunststoffträger nach einem der vorhergehenden Ansprüche, **dadurch gekennzeichnet, dass** der Transponder als RFID-Transponder ausgebildet ist.

9. Einschlaghammer zum Einschlagen des Kunststoffträgers gemäß einem der vorhergehenden Ansprüche in den zu kennzeichnenden Gegenstand, **dadurch gekennzeichnet, dass** in die Schlagfläche (35) des Hammerkopfes (33) eine durchgehende Linearnut (36) eingeformt ist, die zur längsverschiebbaren Aufnahme des Vorsprungs (31) des Kunststoffträgers ausgebildet ist.

10. Einschlaghammer nach Anspruch 9, **dadurch gekennzeichnet, dass** sich die Linearnut (36) parallel zum Hammerstiel (34) des Einschlaghammers (32) erstreckt.

## Claims

1. Plastic holder with a platelet-shaped transponder holder (18) with a transponder comprising a data memory for wireless data transfer, wherein the transponder holder (18) can be locked or clamped to the plastic holder, wherein the plastic holder is provided with fastening means (13, 14) for securing to objects to be marked electronically, wherein the plastic holder comprises a base part (10) and a cover part (11; 30) joined or joinable to one another, and wherein the transponder holder (18) can be locked or clamped in between, **characterised in that** the cover part (11; 30) is platelet-shaped in design and provided with a projection (15; 31) for knocking the cover part (11; 30) off the likewise platelet-shaped base part (10), **in that** a slot is left for inserting the platelet-shaped transponder holder (18) between the cover part (11; 30) and the base part (10), and **in that** the fastening means (13, 14) are designed as integral driving-in projections for driving into the wooden object to be marked.

2. Plastic holder according to claim 1, **characterised in that** the projection (15; 31) is designed pot- or rail-shaped.

3. Plastic holder according to any of the preceding claims, **characterised in that** it comprises at least one flexible locking tab (20) for locking into a corresponding recess of the transponder holder (18), which is preferably integrated into the plastic holder or represented by U-shaped slots.

4. Plastic holder according to claim 3, **characterised in that** the at least one locking tab (20) is provided with a locking projection (21) for engagement with the recess represented by a through-hole or indentation in the transponder holder (18).

5. Plastic holder according to any of the preceding claims, **characterised in that** the base part (10) or the cover part (11; 30) is provided with mounting pegs (16) for engagement with corresponding peg recesses (17) of the other part for securing the two parts (10, 11; 30) to one another.

6. Plastic holder according to any of the preceding claims, **characterised in that** four integral hook-shaped retaining projections (12) are provided at its four corners, which extend in the opposite direction relative to the driving-in projections (13, 14) and which are designed to be fitted to the head of a driving-in hammer.

7. Plastic holder according to any of the preceding claims, **characterised in that** the transponder holder (18) is designed as an oblong platelet and, in addition to the transponder, supports a transmitter and/or receiver aerial (23).

8. Plastic holder according to any of the preceding claims, **characterised in that** the transponder is designed as an RFID transponder.

9. Driving-in hammer for driving the plastic holder according to any of the preceding claims into the object to be marked, **characterised in that** the striking surface of the hammer head (33) has an integral linear groove (36) designed to accommodate the projection (31) of the plastic holder while allowing longitudinal movement.

10. Driving-in hammer according to claim 9, **characterised in that** the linear groove (36) extends parallel to the shaft (32) of the driving-in hammer.

## Revendications

1. Support en matière plastique comportant un support de transpondeur (18) en forme de plaquette avec un transpondeur présentant une mémoire de données servant à la transmission de données sans fil, le support de transpondeur (18) pouvant être enclenché ou calé avec le support en matière plastique, le support en matière plastique étant pourvu de moyens de fixation (13, 14) permettant la fixation à des objets à identifier électroniquement, le support en matière plastique se composant d'un support (10) pourvu des moyens de fixation (13, 14) et d'un élément de recouvrement (11 ; 30), qui sont reliés ou peuvent être reliés l'un à l'autre, et le support de transporteur (18) pouvant être enclenché ou calé entre les deux, **caractérisé en ce que** la pièce de recouvrement (11 ; 30) est réalisée sous forme de plaquette et est munie d'une saillie (15 ; 31) dépassant de son plan pour séparer la pièce de recouvrement (11 ; 30) du support (10) également en forme de plaquette, **en ce qu'**une fente permettant d'insérer le support de transpondeur (18) en forme de plaquette entre la pièce de recouvrement (11 ; 30) et le support (10) est laissée libre, et **en ce que** les moyens de fixation (13, 14) sont réalisés sous forme de saillies d'enfoncement moulées d'un seul tenant sur le support (10) pour enfoncer l'objet en bois à identifier.

2. Support en matière plastique selon la revendication 1, **caractérisé en ce que** la saillie (15 ; 31) est réalisée à la manière d'un pot ou en forme de baguette.

3. Support en matière plastique selon l'une quelconque des revendications précédentes, **caractérisé en ce qu'**il possède au moins une languette d'arrêt (20) flexible permettant l'enclenchement dans un évidement d'encliquetage correspondant du support de transpondeur (18), qui est moulé de préférence d'un seul tenant ou formé par des fentes en forme de U (19).

4. Support en matière plastique selon la revendication 3, **caractérisé en ce que** l'au moins une languette d'arrêt (20) est dotée d'une saillie d'encliquetage (21), qui est prévue pour la prise dans l'évidement d'encliquetage réalisé sous forme de trou de passage ou de creux dans le support de transpondeur (18).

5. Support en matière plastique selon l'une quelconque des revendications précédentes, **caractérisé en ce que** le support (10) ou la pièce de recouvrement (11 ; 30) est doté de broches de fixation (16) qui sont réalisées pour la fixation des deux pièces (10, 11 ; 30) l'une contre l'autre pour la prise dans des logements de broches (17) correspondants de l'autre partie.

6. Support en matière plastique selon l'une quelconque des revendications précédentes, **caractérisé en ce que** quatre saillies de retenue (12) de type crochet, qui s'étendent par rapport aux saillies d'enfoncement (13, 14) dans la direction opposée et qui sont réalisées pour l'enfichage sur la tête d'un marteau d'enfoncement, sont moulées au niveau de ses quatre coins.

7. Support en matière plastique selon l'une quelconque des revendications précédentes, **caractérisé en ce que** le support de transpondeur (18) est réalisé sous forme de plaquette allongée et porte en plus du transpondeur une antenne d'émission et/ou de réception (23).

8. Support en matière plastique selon l'une quelconque des revendications précédentes, **caractérisé en ce que** le transpondeur est réalisé sous forme de transpondeur RFID.

9. Marteau d'enfoncement servant à enfoncer le support en matière plastique selon l'une quelconque des revendications précédentes dans l'objet à identifier, **caractérisé en ce qu'**une rainure linéaire continue (36), qui est réalisée pour le logement déplaçable en longueur de la saillie (31) du support en matière plastique, est formée dans la surface de frappe (35) de la tête de marteau (33).

10. Marteau d'enfoncement selon la revendication 9, **caractérisé en ce que** la rainure linéaire (36) s'étend parallèlement au manche (34) du marteau d'enfoncement (32).
